Europäisches Patentamt

European Patent Office

Office européen des brevets

(11) Veröffentlichungsnummer: **0 469 510 A1**

# EUROPÄISCHE PATENTANMELDUNG

(21) Anmeldenummer: **91112701.7**

(22) Anmeldetag: **29.07.91**

(51) Int. Cl.5: **B64C 27/00**

(30) Priorität: **31.07.90 DE 4024328**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **ANDROIDENSTIFTUNG LAUSANNE**
**Avenue de l'elise 13**
**CH-1000 Lausanne 13(CH)**

(72) Erfinder: **Heitz, Christoph K., Dipl.-Ing.**
**Grünwalder Strasse 152 A**
**W-8000 München 90(DE)**

(54) **Verfahren und Vorrichtung zum Ausgleich instationärer Wechselkräfte bei rotierenden Systemen.**

(57) Mit Hilfe der bei Hubschrauberrotoren und Windrädern üblichen statischen und dynamischen Ausgleichmethoden lassen sich die im Betrieb insbesondere in Lastwechselphasen auftretenden instationären Wechselkräfte nicht ausreichend erfassen und ausgleichen.

Die Erfindung beschreibt einerseits ein Verfahren, das Gebrauch macht von einem während des Betriebs wirksamen Regelkreis zur ständigen Überwachung instationärer Wechselkräfte und zum Nachstellen von Trimmvorrichtungen zum Ausgleich dieser Wechselkräfte und beschreibt eine dafür notwendige Vorrichtung, die lineare Stellkräfte auf sich drehende Systeme überträgt.

FIG 1A

FIG 1B

FIG 1

Die Erfindung betrifft ein Verfahren zum Ausgleich instationärer Wechselkräfte bei Hubschraubern, Windrädern und anderen Drehsystemen sowie eine Vorrichtung zur Übertragung linearer Stellkräfte auf rotierende Systeme wie etwa auf Rotorachsen von Hubschraubern und Windrädern zu vorgenanntem Zweck oder ganz allgemein auf Drehachsen.

Unerwünschte Schwingungen bei sich drehenden Systemen entstehen immer dann, wenn Massenschwerpunktachse, Massenträgheitsmomentenachse und geometrische Rotorachse nicht zusammenfallen.

Das jeweilige Drehsystem muß Dann so ausbalanciert werden, daß keine unerwünschten Schwingungen entstehen. Bei Hubschraubern wird bis dato der Versuch gemacht, einerseits durch hohen Aufwand an Präzision bei der Fertigung der Rotorblätter, durch paarweises Aussuchen von möglichst gleichen Rotorblättern, wie in DE 3622908 C2 beschrieben, andererseits durch Trimmgewichte, die in sehr aufwendigen Wiegeverfahren einjustiert werden, ein Optimum in bezug auf Schwingungsfreiheit zu erreichen wie in P 1 781 223. Hierbei ist vorgesehen, daß kleine Gewichte in Röhren parallel zur Rotorblattlängsachse verschiebbar angeordnet sind.

Nun zeigen sich aber insbesondere bei Lastwechseln im Betrieb häufig sehr störende Vibrationen, ausgelöst durch instationäre radiale und tangentiale Wechselkräfte.

Deren Ursachen liegen in dem aufgrund der Verwendung inhomogenen Materials ungleich über die Rotorblattlänge verteilten Gewicht und den, abhängig von der Winkelgeschwindigkeit, nicht ausgeglichenen Massenträgheitsmomenten. Hierdurch kommt es zu Kreiselungen, da die Rotorachse versucht, quer zu den auslenkenden Kräften auszuweichen.

Alle Versuche, diesen Schwingungen durch statische oder dynamische Messungen und Korrekturmaßnahmen an den Rotorblättern bei der Einjustierung am Boden beizukommen, müssen als nicht befriedigend angesehen werden.

Verfahren zur Reduzierung von Schwingungen während des Betriebs wurden in der Vergangenheit nicht favorisiert. Doch gibt es bei Hubschrauber-Rotoren die sogenannten passiven Schwingungsdämpfer: Auf jedem Rotorblattansatz etwa einen halben Meter von der Rotorachse entfernt ist eine Kugel von etwa einem Kg Masse auf einem Schwenkarm angebracht, der mit Dämpfung und Rückstellfeder versehen eine gewisse radiale Bewegung der Kugel zuläßt. Die Massenträgheit der Kugel wirkt dann jeder radial auftretenden Schwingungsbewegung der Rotorachse entgegen. Ein ähnliches passives Verfahren sehen mehrere amerikanische Patente vor (US 3 910 720, US 4 596 513). Hierbei ist jeweils eine luftgefederte Absorbermasse zentrisch über der Rotorachse anordnet und wirkt deren größter Schwingung entgegen.

Auch passive Schwingungsdämpfungsvorrichtungen sind bekannt geworden, die sich auf die die Rotorachse tragenden Massen, insbesondere das Getriebe, beziehen (US 3 836 098). Hierbei wird jeweils ein der größten Schwingungsamplitude entgegenwirkendes Gewicht durch eine entsprechende gedämpfte Bewegung einer Masse aufgebracht.

Eine amerikanische Anmeldung (WO 89/01896) bezieht sich auf einen Regelkreis, der zum Einmessen aufgebaut wird. Die Anmeldung begnügt sich mit festen Einstellungen der Trimmung durch Längenveränderung der Anstellwinkelhebel, Verbiegung der Blatthinterkante und dem Hinzufügen von Gewichten an bestimmten Stellen über der Länge des Blattes.

Es sind einige amerikanische Vorschläge bekannt geworden (siehe VERTIFLITE 5/6, 1983,S.28..32 und US 3 938 762), die ähnlich wie das Verfahren dieser Anmeldung mit den Mitteln eines Regelkreises eine Schwingungsunterdrükkung vorschlagen.

Diese zielen aber darauf ab, die enstehenden Schwingungen dadurch zu kompensieren, daß sie der Blattanstellwinkelstellung (Pitch-Control), die üblicherweise mit Hilfe der sog. Schwabbelscheibe gesteuert wird, eine Kompensationsbewegung überlagern.

Mit keinem der genannten Vorschläge lassen sich die instationären radialen Wechselkräfte wirksam unterdrücken.

Der Erfindung liegt die Aufgabe zugrunde, ein Verfahren der eingangs erwähnten Art zu beschreiben, mit dessen Hilfe diese radialen instationären Wechselkräfte während des Betriebs reduziert werden und darüber hinaus eine Vorrichtung für die dafür notwendige Übertragung von Stellkräften auf Drehsysteme anzugeben.

Gelöst wird die Aufgabe das Verfahren betreffend durch den Anspruch 1. Die Vorrichtung betreffend wird die Aufgabe durch die Ansprüche 2 bis 15 gelöst. Obwohl diese Vorrichtung am Beispiel des Rotors eines Hubschraubers beschrieben wird, ist ihre Anwendung nicht hierauf beschränkt. Vielmehr eignet sich die Vorrichtung generell zur Übertragung von linearen Stellkräften auf sich drehende Systeme, wie z.B. bei Robotern, Zentrifugen und Werkzeugmaschinen.

Die Vorteile des erfindungsgemäßen Verfahrens sind technischer und ergonomischer Art. Sie sind nachfolgend am Beispiel eines Hubschrauber-Rotors aufgeführt:

- Die Maß-, Gewichts- und Fertigungstoleranz bei der Fertigung von Rotorblättern kann größer sein, also ist der Fertigungsaufwand niedriger. Das Trimmverfahren wird wesentlich einfacher.

- Der Austausch eines einzelnen Blattes und nicht eines Paares ist möglich, d.h. das paarweise Aussuchen von Blättern entfällt. Damit wird die Lagerhaltung für den Ersatz einfacher.
- Die Torsionsbiegebelastungen der Rotorachse werden reduziert. Diese ist damit wesentlich länger im Einsatz.
- Die Vibrationen, die sich vom Rotor auf das gesamte Gerät, insbesondere die Kabine oder bei Windgeneratoren auf die Gondel und den Mast übertragen, werden auf ein Minimum reduziert. Damit gehören die von den Vibrationen verursachten Materialermüdungsrisse der Vergangenheit an.
- Auch Kompensationsmassen in der Zelle und am Getriebeblock sind nicht mehr notwendig, das Leistungsgewicht wird größer.
- Windgeneratoren mit dieser Art des Ausgleichs instationärer Wechselkräfte können dann erst in einem Bereich arbeiten, in dem sie wirtschaftlich sind.
- Der Vorteil der für das Verfahren notwendigen Vorrichtung, des sogenannten Stellkraftübertragers, liegt darin, lineare Stellkräfte auf Rotoren oder ganz generell auf sich drehende Achsen zu übertragen, was z.B. bei Werkzeugmaschinen und Robotern gefordert wird.

Nachfolgend soll das erfindungsgemäße Verfahren und die Vorrichtung anhand der Zeichnungen näher erläutert werden. Hierbei zeigen:

FIG.1 eine schematisierte Gesamtübersicht aller für den Zweck der Erfindung wichtigen Komponenten eines Hubschrauberrotors mit Varianten in Details in FIG.1A und 1B.

FIG.2 eine perspektivische Darstellung der Grundelemente eines sogenannten Stellkraftübertragers

FIG.3 Eine Variante des Stellkraftübertragers.

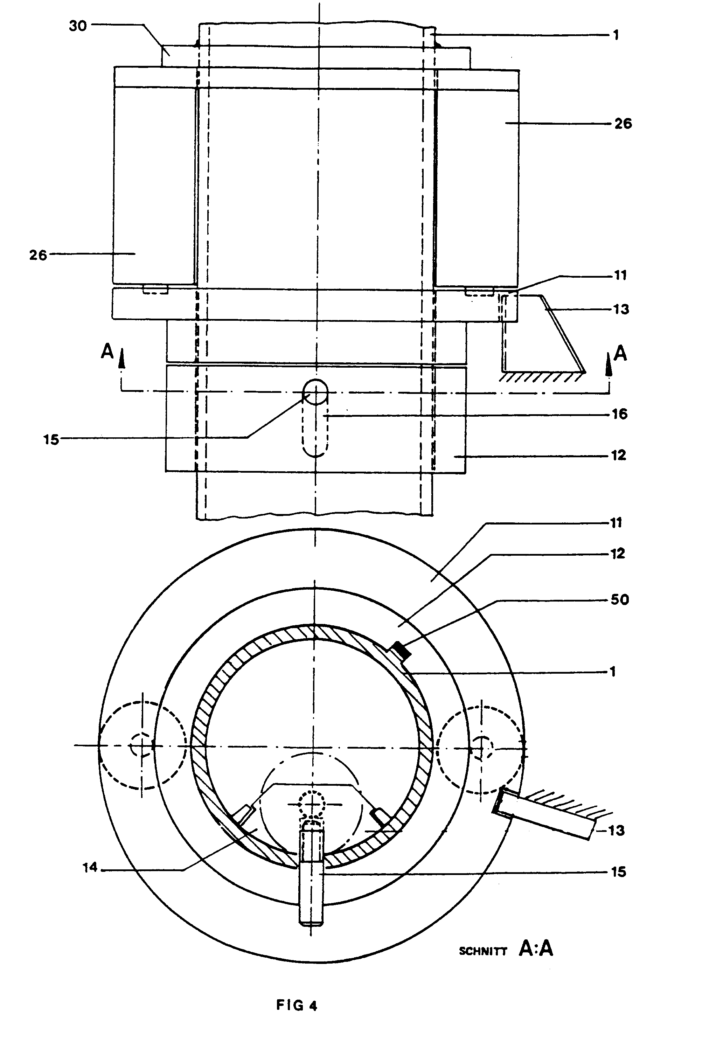

FIG.4 Eine weitere Variante des Stellkraftübertragers.

FIG.5 Eine weitere Variante des Stellkraftübertragers.

FIG.6 Eine Variante des Stellkraftübertragers mit Übertragung der Bewegung am Rotorachsende mit Hilfe einer Gestängebrücke.

FIG.7 Eine Variante des Stellkraftübertragers, bei dem die Übertragung der Bewegung mit Hilfe von Seilzügen und Umlenkrollen geschieht.

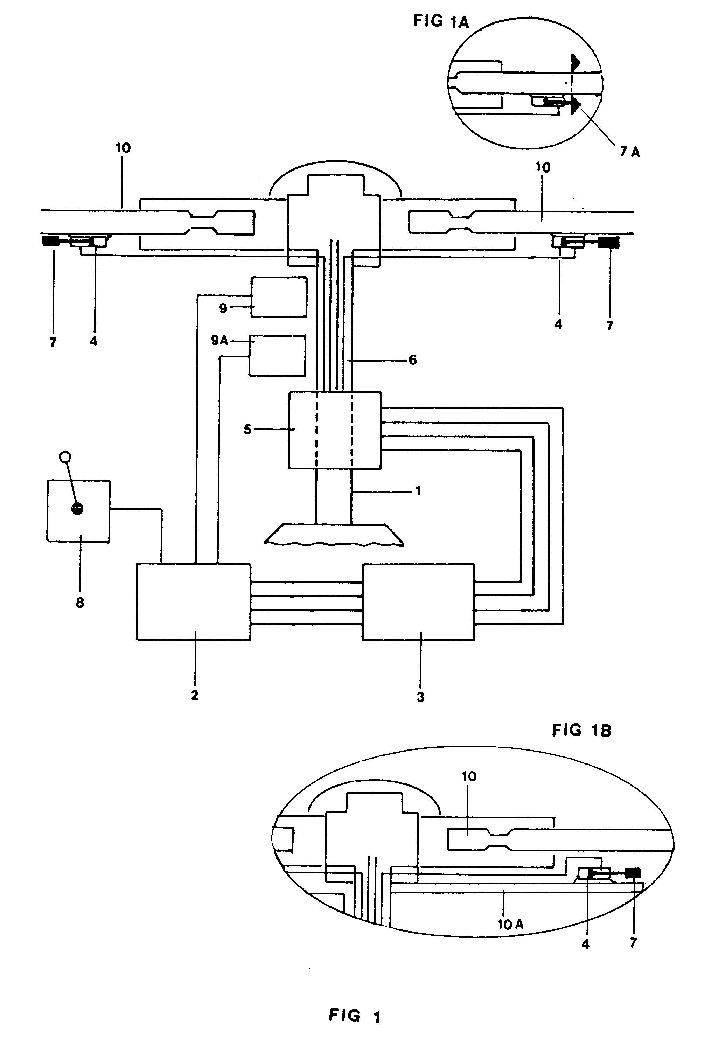

Anhand von FIG.1 soll zunächst das Verfahren Verfahren zur Ausbalancierung dynamischer Wechselkräfte bei Rotorsystemen beschrieben werden.

Ein dem Stand der Technik entsprechender Sensor (9) mißt die durch instationäre Wechselkräfte entstehenden Auslenkungen der Rotorachse (1) und übermittelt entsprechende Signale über Schleifringübertrager oder telemetrisch an ein elektronisches Steuergerät (2).

Ein zweiter Sensor, ein sogenannter Winkelgeber (9A), ermittelt die Stellung der Rotorachse, bei der die Auslenkung gemessen wird und übermittelt entsprechende Signale ebenfalls an das elektronische Steuergerät (2).

Das elektronische Steuergerät (2) erzeugt aus den Signalen des Beschleunigungsaufnehmers (9) und des Winkelgebers (9A) elektrische Signale (Signalvektoren), die Phasenlage und Amplitude für zu erzeugende Ausgleichskräfte repräsentieren. Es muß in der Lage sein, die gemessenen Signale bis in Bereich von etwa 1/2000 Sekunde zu verarbeiten, vorzugsweise mit Hilfe eines Mikroprozessors und eines geeigneten Algorithmus, um daraus Steuerimpulse für die nachfolgenden Schritte zu erzeugen. Für Test- und Justierzwecke ist das Steuergerät mit von außen bedienbaren Einstellelementen (8) versehen, über die die Amplitude und die Phasenlage der Steuerimpulse einstellbar sind. Damit ist es möglich, von Hand ein Optimum an Vibrationsunterdrückung einzustellen.

Abhängig davon, ob im Einzelfall nur eine einzelne Stellkraft erzeugt und übertragen wird oder mehrere, z.B. vier, d.h. für jedes Rotorblatt eine, werden die Teilsysteme, die in den noch folgenden Stufen des Verfahrens einzusetzen sind, einfach oder dementsprechend mehrfach ausgelegt werden müssen.

Dem folgend setzen ein oder mehrere Wandler (3) elektrohydraulischer, elektromechanischer oder elektromagnetischer Bauart die erzeugten Signalvektoren in mechanische Schubkräfte um.

Dementsprechend übertragen ein oder mehrere Stellkraftübertrager (5) die in der Wandlerstufe erzeugten mechanischen Schubkräfte auf die Rotorachse (2), setzen also jeweils eine lineare Bewegung außerhalb der Rotorachse in eine lineare axiale Bewegung auf oder in der sich drehenden Rotorachse um.

Ein oder mehrere translatorische Kraftübertrager (6) übertragen die Bewegung im Inneren der Rotorachse bis in den Bereich der Rotorblätter oder der Trimmstummel. Ein translatorischer Kraftübertrager (6) besteht z.B. aus einem an der inneren Wand der Rotorachse (1) angeordneten Schlitten oder Wagen (14) und einem Gestänge, einem geschlossenen Hydrauliksystem oder einer Anordnung aus Seilzug und Umlenkrollen.

Die so übertragenen Kräfte wirken mittels Hebelgestängen oder hydraulischen Stelleinrichtungen auf Trimmgewichte (7) oder aerodynamisch wirkende Trimmfinnen (7A) in bzw. auf den Rotorblättern (10) oder den Trimmstummeln (10A). Die Trimmgewichte können beim Einmessen im Stillstand so eingestellt werden, daß sie keine durch Zentrifugalkraft entstehende Störungen bewirken. Sie können nun im Betrieb im Rahmen des beschriebenen Regelkreises radial bewegt werden. Dadurch entstehen kleine Zentrifugalkräfte, die den auslösenden instationären Wechselkräften entgegenwirken und diese möglichst gut ausgleichen.

Die für das Verfahren unabdingbare Vorrichtung ist der genannte Stellkraftübertrager (5), der für die Übertragung der vom Wandler erzeugten Schubkräfte auf den Rotor sorgt, also eine lineare Bewegung außerhalb einer Drehachse in eine lineare Bewegung auf oder in der sich drehenden Achse umsetzt.

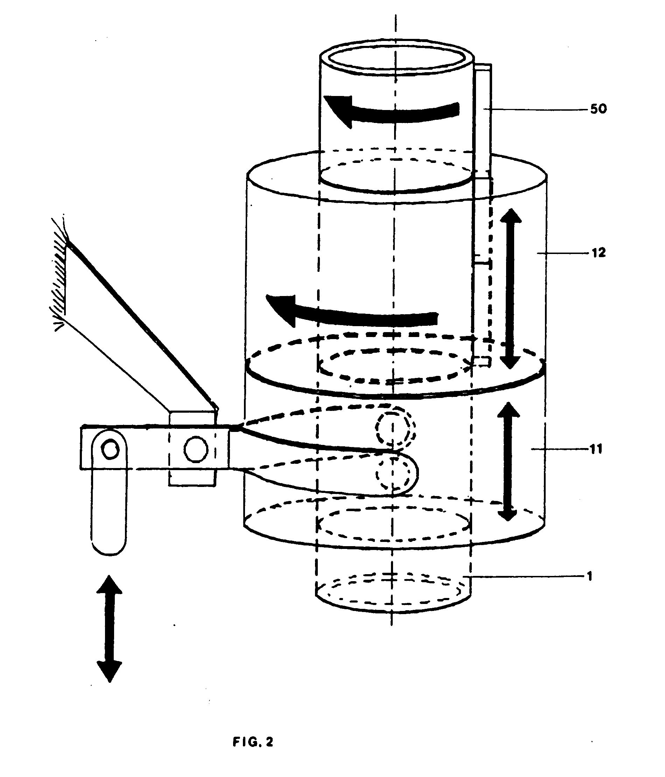

Ein solcher Stellkraftübertrager wird unter Zuhilfenahme der FIG.2 im folgenden beschrieben: Auf der Rotorachse (1) oder einer Verlängerung derselben sind nebeneinander zwei axial verschiebbare Ringe angeordnet, von denen der eine, der Schubring (11), gehalten durch ein äußeres Gestänge (13), sich nicht mitdreht, der andere aber, gehalten durch eine geeignete Nut- und Federeinrichtung (50), auf der Rotorachse (1) mitgenommen wird.

Der Schubring (11) wird durch eine von außen wirkende Kraft axial verschoben, wobei diese Kraft aufgebracht werden kann durch eine Servoeinrichtung, z.B.durch Servomotoren (26) oder eine Gestängegabel (25).

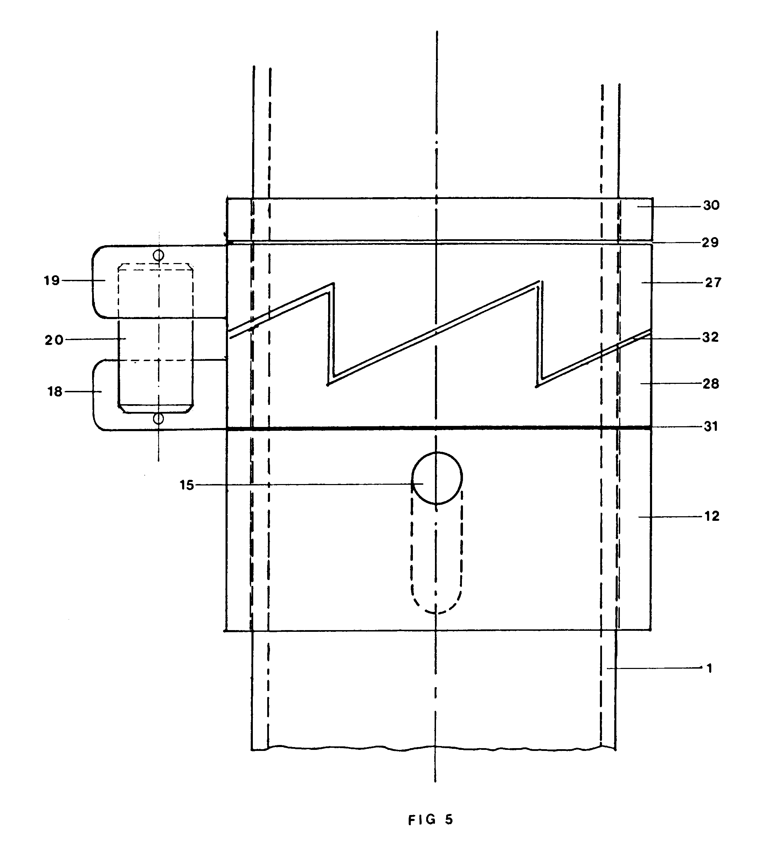

Eine ebenfalls für die Erzeugung der axial auf den Schubring wirkenden Kraft geeignete Einrichtung besteht entsprechend FIG.5 aus zwei auf der Rotorachse beweglich angeordneten Ringen (27,28), die auf den einander zugewandten Stirnseiten mit schiefen Ebenen versehen sind. Deren voneinander abgewandte Stirnseiten (29,31) verändern ihre Entfernung, wenn die Ringe durch eine hydraulischen Vorrichtung (18,19, 20), wie in FIG.5 schematsch angedeutet, gegeneinander verdreht werden. Eine axiale Kraft entsteht dann, wenn der eine Ring sich gleitend gegen einen auf der Achse festsitzenden Ring (30) abstützt.

Die Bewegung des Schubrings (11) überträgt sich auf den mit ihm in Kontakt stehenden Übertragungsring (12). Dieser auf der Rotorachse mitdrehende und axial verschiebliche Übertragungsring (12) überträgt seinerseits mit Hilfe von nach dem Stand der Technik bekannten Elementen des Maschinenbaus, z.B. Zapfen, Hebeln oder Zahnrädern, diese Bewegung einem der in der Rotorachse (1) liegenden translatorischen Kraftübertrager (6).

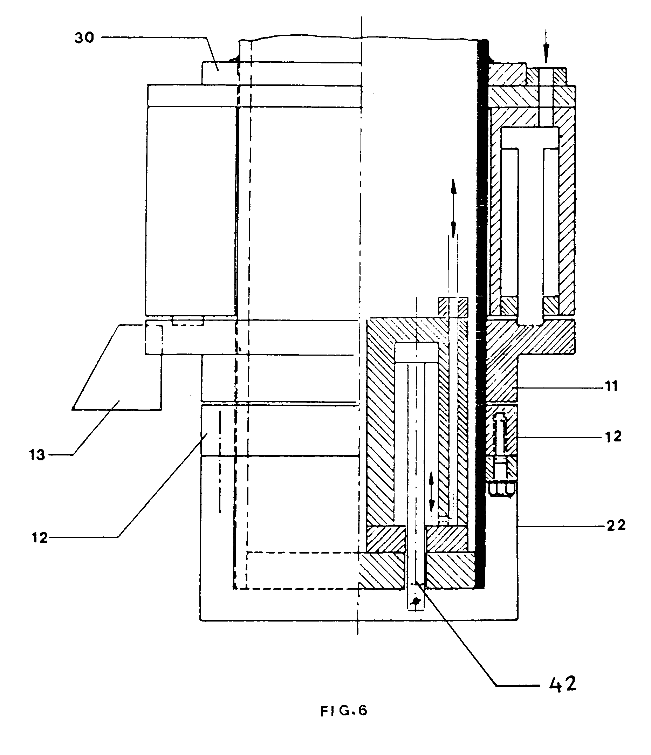

Die Übertragung der Bewegung des Übertragungsrings nach innen kann auch mit Hilfe einer Gestängebrücke (22), (FIG.6) geschehen, die über das untere Ende der Rotorachse hinausreicht und mit einem an ihr befestigten Stößel (42) auf den im Inneren der Rotorachse befindlichen Schlitten oder Wagen (14) wirkt.

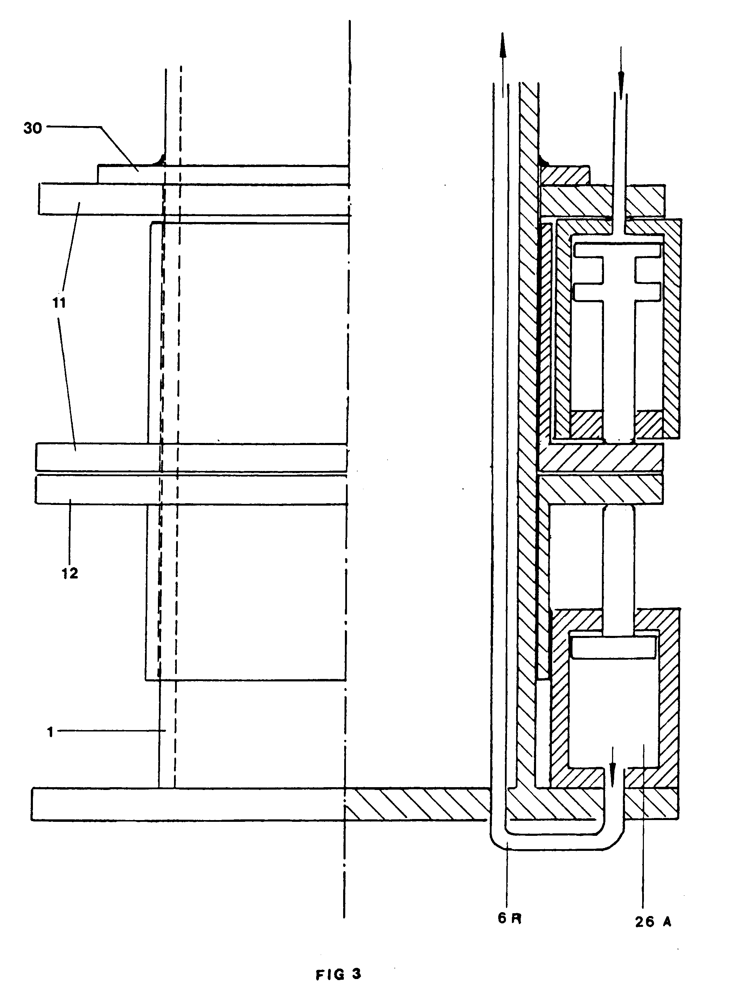

Bei einer technisch sehr einfachen Variante (FIG.3) betätigt der Übertragungsring (12) einen zum translatorischen Kraftübertrager (6) gehörenden, außen auf der Rotorachse (1) angeordneten Telemotor (26A) direkt. Bei dieser Variante ist der Schlitten oder Wagen verzichtbar, denn die Hydraulikleitung (6R) führt direkt zum Hydraulikmotor (4) der die Trimm-Masse (7) oder eine aerodynamische Trimmflosse (7A) bewegt.

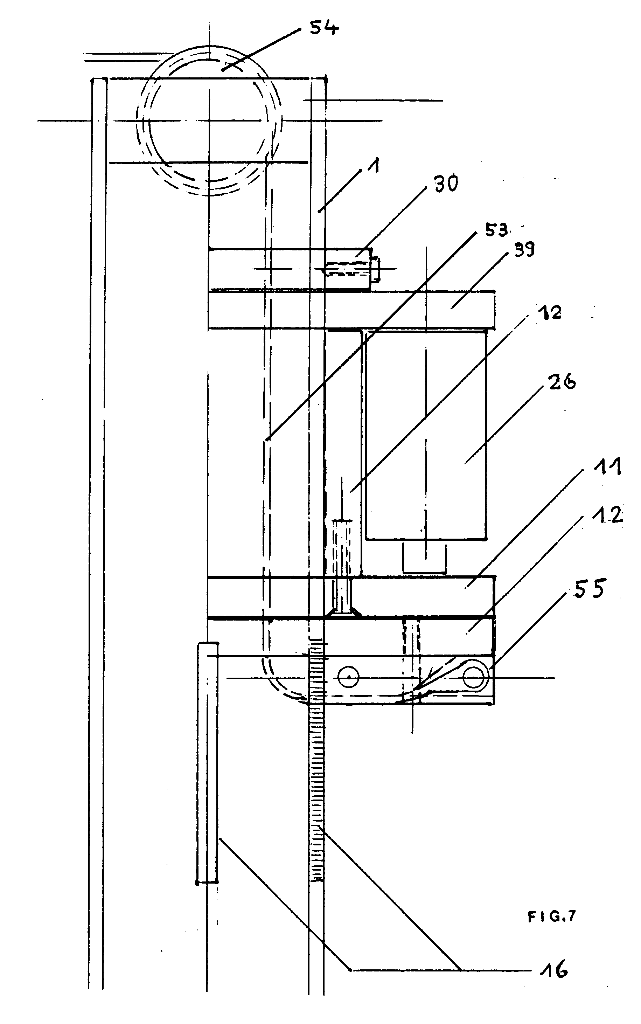

Eine ähnlich einfache Lösung wird entsprechend FIG.7 mit Hilfe eines Seilzugs (53) und Umlenkrollen (54) realisiert. Der Seilzug ist über einen Träger (55) oder Dorn, der in das Innere der Rotorachse ragt, am Übertragungsring befestigt. Die Zentrifugalkraft des Trimmgewichts hält ihn unter Spannung. Bewegt sich der Übertragungsring (12) unter dem Eindruck der vom Schubring (12) mitgeteilten Kraft nach unten, zieht der Seilzug, der im Inneren der Rotorachse nach oben zu ihrem oberen Ende führt, über die Umlenkrolle das Trimmgewicht radial einwärts.

Sind nun mehrere Stellkraftübertrager notwendig, so können diese längs der Rotorachse verteilt oder konzentrisch angeordnet sein.Sind sie längs der Rotorachse verteilt angeordnet, müssen die genannten Maschinenelemente z.B. Zapfen (15) für die Übertragung der Bewegung durch Schlitze (16) in der Wand der Rotorachse oder einer Verlängerung derselben wirken.

Kommen mehrere Stellkraftübertrager entsprechend der Variante nach FIG.3 zum Einsatz, so muß nur die Hydraulikleitung durch die Wand der Rotorachse geführt werden.

Bei einer konzentrischen Lösung müssen die Zapfen (15) der weiter außen befindlichen Übertragungsringe durch Schlitze in den mehr innen befindlichen Ringen geführt werden, um die Bewegungen einzeln übertragen zu können

**Patentansprüche**

1. Verfahren zum Ausgleich von instationären Wechselkräften, die bei rotierenden Systemen mit an einer Rotorachse angeschlossenen Massen auftreten, insbesondere bei Rotoren von Hubschraubern und Windrädern, bei dem die durch die genannten Kräfte entstehenden Auslenkungen der Rotorachse (1) durch einen Regelkreis ausgeglichen werden, dadurch gekennzeichnet, daß

a) die entsprechend den Sensorsignalen in einem geeignetem Rechner ermittelten und für die Kompensation notwendigen mechanischen Schubkräfte außerhalb der Rotorachse in einer Wandlereinrichtung (3) erzeugt und mittels einer Stellkraftübertragungseinrichtung (5) auf ein translatorisches Kraftübertragungssystem (6) in der Rotorachse (1) übertragen werden,

b) die auf das translatorische Kraftübertragungssystem (6) der Rotorachse (1) übertragenen Stellkräfte von diesem in den Bereich der an der Rotorachse (1) angeschlossenen Massen (10) übertragen werden,

c) die in den Bereich der an der Rotorachse (1) angeschlossenen Massen (10) übertragenen Stellkräfte kleine Massen (7) radial bewegen, wodurch eine Veränderung der Zentrifugalkraft bewirkt wird derart, daß diese den ursprünglichen zentrifugal wirkenden instationären Wechselkräften entgegen wirkt.

2. Vorrichtung zur Durchführung des Verfahrens nach Anspruch 1 dadurch gekennzeichnet, daß sie über Sensoren (9,9A) für die Erfassung der radialen Auslenkungskräfte, einen Rechner (7) für die Ermittlung der Größe und Richtung von Kompensationskräften, einen Kraft/Weg-Wandler (3), eine Stellkraftübertragungseinrichtung (5), einen translatorischen Kraftübertrager (6) und Trimmeinrichtungen (4,7,7A) im Bereich der an die Rotorachse (1) angeschlossenen Massen (10) verfügt.

3. Vorrichtung entsprechend Anspruch 2 dadurch gekennzeichnet, daß die Stellkraftübertragungseinrichtung (5) zwei achsial verschiebbare Ringe (11,12) umfaßt, die nebeneinander auf der Rotorachse (1) angeordnet sind, von denen der eine, der Schubring (11), durch das äußere Gestänge (13) drehfest gehalten ist und von diesem achsial bewegt werden kann, und von denen der andere, ein Übertragungsring (12), der mit dem Schubring (11) in Kontakt steht, gehalten durch eine geeignete Nut- und Federeinrichtung (50), an die Rotorachse (1) achsial verschieblich zur gemeinsamen Drehung mit dieser angeschlossen ist und über ein den jeweiligen konstruktiven Erfordernissen folgendes Maschinenelement, z.B. einen Zapfen (15), jede Achsialbewegung an das im Innern der Rotorachse (1) angeordnete translatorische Kraftübertragungssystem (6) mitteilt.

4. Vorrichtung nach Anspruch 3 dadurch gekennzeichnet, daß die Stellkraftübertragungseinrichtung (5) über interne Telemotoren (26) verfügt, die den Schubring (11) achsial bewegen und so im Sinne des Verfahrens Stellkräfte auf die sich drehende Rotorachse (1) übertragen.

5. Vorrichtung nach Anspruch 2 dadurch gekennzeichnet, daß der Übertragungsring (12) einen zum translatorischen Kraftübertrager gehörenden, außen auf der Rotorachse (1) angeordneten hydraulischen Telemotor (26A) direkt betätigt, der seinerseits die Kraft über eine im Innern der Rotorachse (1) angeordnete Hydraulikleitung (6R) an einen Servomotor (4) im Bereich der an die Rotorachse (1) angeschlossenen Massen überträgt.

6. Vorrichtung nach Anspruch 2 dadurch gekennzeichnet, daß ein translatorisches Kraftübertragungssystem, bestehend aus einem in der Rotorachse (1) befindlichen Gestänge, die Kraft in den Bereich der an die Rotorachse (1) angeschlosenen Massen überträgt.

7. Vorrichtung nach Anspruch 2 dadurch gekennzeichnet, daß ein translatorisches Kraftübertragungssystem, bestehend aus einem in der Rotorachse (1) befindlichen geschlossenen Hydrauliksystem, die Bewegung in den Bereich der an die Rotorachse (1) angeschlossenen Massen überträgt

8. Vorrichtung nach Anspruch 2 dadurch gekennzeichnet, daß ein translatorisches Kraftübertragungssystem, bestehend aus einer in der Rotorachse (1) befindlichen Kombination aus einem am Schlitten (14) fixierten Seilzug und Umlenkrollen, die die Kraft in den Bereich der an die Rotorachse (1) angeschlosenen Massen überträgt.

9. Vorrichtung nach Anspruch 2 dadurch gekennzeichnet, daß ein Trimmgewicht (7) innerhalb der an die Rotorachse angeschlossenen Massen radial verschiebbar angeordnet ist und während des Betriebs zum Ausgleich der instationären Wechselkräfte radial verschoben werden kann.

10. Vorrichtung nach Anspruch 2, dadurch gekennzeichnet, daß ein an den an der Rotorachse angeschlossenen Massen schwenkbar angeordnetes Trimmgewicht (7A) vorhanden ist, das während des Betriebs zum Zweck des Trimmens radial in bezug auf die Rotorachse ständig aus- und einwärts geschwenkt werden kann.

11. Vorrichtung nach Anspruch 2, dadurch gekennzeichnet, daß ein spezieller radial angeordneter Träger (10A) (=Trimmstummel) vorhanden ist, der die entsprechend den jeweiligen technischen Erfordernissen zum Einsatz kommende Trimmeinrichtung hält.

12. Vorrichtung nach Anspruch 2 dadurch gekennzeichnet, daß die Rotorachse (1) die Achse eines Drehflügler-Rotors ist und die angeschlossenen Massen Rotorblätter sind.

13. Vorrichtung nach Anspruch 2 dadurch gekennzeichnet, daß die Rotorachse (1) die Achse eines Windrades ist und die angeschlossenen Massen Windradblätter sind.

14. Vorrichtung nach Anspruch 2 dadurch gekennzeichnet, daß die Rotorachse (1) die Achse einer Zentrifuge ist und der Drehbehälter die angeschlossenen Massen darstellt.

15. Vorrichtung nach Anspruch 2 dadurch gekennzeichnet, daß die Rotorachse (1) die Drehachse eines Roboters ist und dessen Schwenkarmglieder die angeschlossenen Massen darstellen.

FIG 1A

FIG 1B

FIG 1

FIG. 2

FIG 3

SCHNITT A:A

FIG 4

10

FIG 5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | WO-A-8 901 896 (TECHNOLOGY INTEGRATION AND DEVELOPMENT GROUP INC.)<br>* Seite 2, Zeile 28 - Seite 3, Zeile 22 * * Seite 4, Zeile 1 - Zeile 25 * * Seite 8, Zeile 3 - Zeile 10; Ansprüche 1,5-6; Abbildung 1 *<br>– – – | 1-2 | B 64 C 27/00 |
| A,D | US-A-3 938 762 (MURPHY)<br>* Spalte 1, Zeile 6 - Zeile 13 * * Spalte 2, Zeile 22 - Zeile 41 * * Spalte 3, Zeile 26 - Spalte 5, Zeile 21; Abbildungen 2-5 *<br>– – – | 1-2 | |
| A | GB-A-2 139 172 (COSTRUZIONI AERONAUTICHE GIOVANNI AUGUSTA SPA)<br>* Seite 1, Zeile 5 - Zeile 13 * * Seite 1, Zeile 24 - Zeile 36 * * Seite 1, Zeile 105 - Zeile 129; Abbildung 1 *<br>– – – | 1-2 | |
| A | US-A-3 795 375 (LEMNIOS)<br>* Spalte 1, Zeile 6 - Zeile 20 * * Spalte 2, Zeile 16 - Spalte 3, Zeile 36; Abbildungen 1-3 *<br>– – – – – | 1-2 | |
| | | | **RECHERCHIERTE SACHGEBIETE (Int. Cl.5)**<br><br>B 64 C<br>G 05 D<br>F 16 F<br>F 03 D |

Der vorliegende Recherchenbericht wurde für alle Patentansprüche erstellt

| Recherchenort | Abschlußdatum der Recherche | Prüfer |
|---|---|---|
| Den Haag | 16 Oktober 91 | RIVERO C.G. |